# EUROPÄISCHE PATENTSCHRIFT

(11) **EP 1 144 179 B1**
(45) Veröffentlichungstag und Bekanntmachung des Hinweises auf die Patenterteilung: **08.01.2003**
(21) Anmeldenummer: 99966850.2
(22) Anmeldetag: 04.12.1999
(51) Int. Cl.: B29C 65/20

(54) **VERFAHREN ZUM STUMPFSCHWEISSEN VERNETZTER POLYETHYLENROHRE (PE-X-ROHRE)**
METHOD FOR BUTT WELDING CROSS-LINKED POLYETHYLENE PIPES (PE-X PIPES)
PROCEDE POUR LE SOUDAGE BOUT A BOUT DE TUBES DE POLYETHYLENE RETICULE (TUBES PE-X)

(30) Priorität: 09.12.1998 DE 19856718
(43) Veröffentlichungstag der Anmeldung: 17.10.2001
(73) Patentinhaber: Kunststoff-Zentrum in Leipzig GmbH, 04229 Leipzig (DE)
(72) Erfinder: TOBIAS, Wolfgang, D-06112 Halle (DE); BERNSTEIN, Gunter, D-09224 Grüna (DE)
(74) Vertreter: Köhler, Tobias, Dipl.-Ing.(FH)
(86) Internationale Anmeldenummer: DE9903940
(87) Internationale Veröffentlichungsnummer: WO00034028

(56) Entgegenhaltungen:
- EP-A- 0 329 349
- DD-A- 139 544
- GB-A- 2 246 318
- PATENT ABSTRACTS OF JAPAN vol. 008, no. 216 (M-329), 3. Oktober 1984 (1984-10-03) -& JP 59 101326 A (DAINICHI NIPPON DENSEN KK), 11. Juni 1984 (1984-06-11)

## Beschreibung

Die Erfindung betrifft ein Verfahren zum Stumpfschweißen von vernetzten Polyethylenrohren ( PE-X-Rohren ) zur Nutzung dieser Rohre im industriellen und erdverlegten Rohrleitungsbau.

Polyethylenrohre hoher Dichte (PE-HD-Rohre) zeichnen sich durch hervorragende Eigenschaften aus. Besonders im Rohrleitungsbau für Gas und Wasser nehmen sie eine dominierende Stellung ein. Sie sind flexibel, elastisch, korrosionssicher, elektrisch isolierend und problemlos schweißbar. Allerdings müssen sie wegen ihrer Anfälligkeit gegen Kerben und Abrasion in steinfreiem Boden verlegt werden, gegebenenfalls ist eine Sandschüttung erforderlich. Diese Sandschüttung kostet nicht selten mehr als das Rohr. Oftmals ist deshalb eine wirtschaftliche grabenlose Verlegung und ein Relining durch Einziehen der Rohre in bestehende marode Rohrleitungen nicht möglich. Diese Erfordernisse und Einschränkungen bestimmen letztendlich die Kosten des Rohrleitungsbaues.

Vernetzte Polyethylenrohre (PE-X-Rohre) übertreffen die Eigenschaften der Polyethylenrohre hoher Dichte ( PE-HD-Rohre ) noch, denn ihre Temperatur-beständigkeit geht bis +100°C, sie sind beständig gegen abrasive Feststoffe und Medien, sie besitzen eine gute Langzeitbeständigkeit, einen niedrigen Reibungskoeffizienten und neigen nicht zur Spannungsrißbildung sowie langsamer und schneller Rißausbreitung. Diese positiven Eigenschaften, insbesondere die höhere Verschleißfestigkeit und die gute Langzeitbeständigkeit der PE-X-Rohre könnten im öffentlichen Bereich für Gas, Wasser-, Abwasser- und Kabelrohre wirtschaftlich genutzt werden . Die Kerbunempfindlichkeit der PE-X-Rohre erfordert keine aufwendige und kostenintensive Sandbettung mehr und gestattet auch die grabenlose Rohrverlegung mit entsprechenden Tiefpflügen. Außerdem ermöglicht sie auch das Relining von Trink- und Abwasserleitungen aus Stahl, in die das flexible und kratzfeste PE-X-Rohr eingezogen wird. Das führt zu erheblichen Einsparungen infolge einer Vereinfachung der Verlegetechnik und zu einer möglichen Reduzierung der Rohrwanddicke aufgrund der höheren Festigkeit der
PE-X-Rohre.

Ein wesentliches Problem bei der Herstellung von Rohrleitungssystemen bildet aber die Verbindungstechnik. So vorteilhaft die zuvor genannten Eigenschaften der PE-X-Rohre sind, so nachteilig ist die fehlende Schweißbarkeit. Durch die Vernetzung geht der thermoplastische Charakter des Ausgangswerkstoffes Polyethylen verloren. Das bedeutet nach allgemeinem Erkenntnisstand u.a., daß vernetztes Polyethylen (PE-X) untereinander keine stoffschlüssige Verbindung eingeht.

Traditionelle Schweißverfahren führen nur zu sehr ungenügenden Schweißnaht-festigkeiten.
Schweißverfahren, die sich durch hohe Wirtschaftlichkeit im traditionellen PE-Rohrleitungsbau auszeichnen, sind das Heizelementschweißen für Rohrdurchmesser >110 mm und das Elektromuffenschweißen (im industriellen Rohrleitungsbau auch das Heizelementmuffenschweißen) meist für kleinere Rohrdurchmesser.

Für vernetzte PE-Rohre sind diese Schweißverfahren, bis auf das Elektromuffenschweißen, nicht einsetzbar, da vernetztes Polyethylen ( PE-X ) infolge seiner molekularen Struktur einen Thermoelast darstellt und unter Wärmeeinwirkung im Schweißtemperaturbereich für PE-HD nicht mehr aufschmilzt, sondern nur gummielastisch weich wird.

Seit Mitte der 70er Jahre werden vernetzte Polyethylenrohre ( PE-X-Rohre ) bis 63 mm im Bereich der Sanitärtechnik, im Warmwasser- und Heizungsbereich sowie auch für Gasdruckleitungen und Druckluftleitungen eingesetzt. Bei diesen erfolgt die Verbindung der meist langen Rohre untereinander mittels mechanischer Verbinder aus Messing oder Edelstahl
(Fachzeitschrift gwf-Gas-Erdgas, Jahrgang 131,1990, Heft 10/11, Seite 477 - 482 ).

Nachteilig bei diesen Lösungen ist der hohe Kosten- und Montageaufwand, der mit zunehmendem Rohrdurchmesser steigt. Darüber hinaus sind die Verbinder werkstoffbedingte Störstellen im Eigenschaftsbild des vernetzten Polyethylens. Das große Interesse aller Rohrleitungsbauer, insbesondere des Gas- und Wasserfaches, an der Nutzung der hervorragenden Eigenschaften der PE-X-Rohre führte zu Untersuchungen über Verbindungsmöglichkeiten und der Zuverlässigkeit dieser Verbindungen.

Nach dem allgemeinen Erkenntnisstand ging man davon aus, daß PE-X nicht verschweißbar ist. Untersuchungen in- und ausländischer Institute und Rohrleitungsbauunternehmen ergaben aber, daß es möglich ist, vernetztes Polyethylen mit unvernetztem zu verschweißen. Es wurde auch festgestellt, daß PE-X mit PE-X nicht verschweißbar ist.

Heizelementschweißverbindungen zwischen PE-X- und PE-HD-Rohren erreichten einen Schweißfaktor von >0,5 ("Einsatz des Rohrwerkstoffes PE-X in der Gasversorgung", Mitgliederinformation Nov. 1997 des Kunststoffrohrverbandes e.V. Bonn ). Allerdings ist eine Verbindung PE-X-Rohr / PE-HD-Rohr ohne wirtschaftliche Bedeutung. Weiterhin wurde der Einsatz von Elektroschweißmuffen aus PE-HD zum Verbinden von PE-X-Rohren erfolgreich erprobt. Beim Schweißvorgang wird das PE-HD aufgeschmolzen, das PE-X wird nur gummielastisch weich. Festigkeitsuntersuchungen ergaben, daß diese Verbindung für den Bereich der Gas- und Wasserversorgung geeignet ist. Einige Rohrleitungen sind im Betrieb ("Der Rohrleitungswerkstoff PE-X; Rohrwerkstoffeigenschaften, Qualitätssicherung und Haupteinsatzgebiete", Tagungsband und Vortrag zu den internationalen Wiesbadener Kunststoffrohrtagen 1998 am 27. und 28. 04.98 und "Entscheidungskriterien bei der Auswahl von Rohrwerkstoffen in der Gasversorgung", ebenfalls aus dem zitierten Tagungsband ).

Dieses Verbindungsverfahren mit Elektroschweißfittings ist mit größer werdendem Rohrdurchmesser kostenintensiv und für das Relining von Rohrsystemen nicht geeignet, da die Elektroschweißmuffen beim Einziehen des PE-X-Rohres stören.

Aus der Schutzrechtsliteratur, DD-WP 139 544, wurde ein Verfahren zum Verbinden vernetzter Halbzeuge, insbesondere von Rohren aus vernetztem Polyethylen bekannt. Danach werden die Fügeflächen der zu verschweißenden Rohrenden mit einem flächigen Heizelement mit 8 Sekunden Anwärmzeit auf mindestens 450°C aufgeheizt und nach dem Entfernen des Heizelementes unter hohem Druck zusammengefügt, wobei der Druck bis zum Abkühlen der Fügezone auf Umgebungstemperatur aufrecht erhalten wird.Dieses Verfahren hat keinen Eingang in die Praxis des Rohrleitungsbaues gefunden, da keine reproduzierbaren und keine befriedigenden Schweißnahtfestigkeiten erreicht wurden.

Weiterhin ist aus der GB-A-2 246 318 ein Stumpfschweißverfahren zum Verbinden von Rohren, Formstücken, Abzweigen und dgl. aus Polyethylen mittlerer oder hoher Dichte bekannt, bei dem die zu verbindenden Rohrenden in einer Schweißvorrichtung mit einem plattenförmigem Heizelement auf Schweißtemperatur erwärmt werden, danach zusammengefügt und bis zur Abkühlung der Fügezone in der Schweißvorrichtung belassen werden. Beim Stumpfschweißen von Rohren größeren Durchmessers wird eine lange Zeit zum Erwärmen der Rohrenden auf Schweißtemperatur benötigt. Diese lange Aufwärmzeit soll verkürzt und damit auch eine Zeiteinsparung beim gesamten Schweißvorgang erreicht werden. Dazu ist die Stumpfschweißvorrichtung mit einem Heizelement (Heizplatte) ausgestattet, welches auf beiden Seiten Nuten oder ein Konturenprofil aufweist, so daß die Wärmeübertragung vom Heizelement zu den Rohrenden durch die so erreichte Vergrößerung der Heizelementfläche verbessert wird. Die Profilierungen können in vielfacher Weise ausgeführt sein und weisen die Form von konzentrischen Ringen oder eine Pyramidenstruktur (Waffeleisenmuster) auf oder sind als Radialnuten/Radialzahnung ausgebildet Die geeignete Profiltiefe bewegt sich im Bereich von 1 - 10 mm.

Die Aufgabe der Erfindung ist es, ein Verfahren zum Stumpfschweißen von vernetzten Polyethylenrohren, vorzugsweise für Durchmesser > 90 mm zu schaffen, welches sich durch Stoffschlüssigkeit der Verbindung, hohe Schweißnahtfestigkeit , Wirtschaftlichkeit und Praxisnähe auszeichnet.

Diese Aufgabe wird erfindungsgemäß durch ein Verfahren gemäß Anspruch 1 gelöst.

Die Erfindung geht von dem an sich bekannten Heizelementstumpfschweißverfahren für Rohre mit einem Rohrdurchmesser >90 mm aus. Erfindungsgemäß werden die Rohrstirnflächen der vernetzten Polyethylenrohre (PE-X-Rohre) mit einem radial gezahnten Heizelement, dessen Temperatur >420°C aber <450°C beträgt, mit einer Anwärmzeit > 60 s in Abhängigkeit von der Rohrwanddicke so räumlich aufgeschmolzen, daß infolge des lokalen thermischen Aufschlusses der vernetzten Werkstoffstruktur vergrößerte und gezahnte Rohrstirnflächen entstehen, deren integrale Schmelzeschicht, die von der Dampf- oder Gasphase bis zur thermoelastischen Phase alle möglichen Schmelzezustandsphasen enthält, beim anschließenden Fügevorgang unter einem Schweißdruck von 0,10 bis 0,40 N/mm² so miteinander in Verbindung kommt, daß die Zahnspitzen der einen Rohrstirnfläche auf die Zahngründe der anderen Rohrstirnfläche treffen, daß eine verbindungsfähige Schmetzephase dieser Schicht durch turbulente Bewegungen an den sich berührenden Zahnflanken einen Mischeffekt der Schmelze hervorruft und eine räumlich verteilte Schweißnaht mit vergrößerter Bindefläche erzeugt. Der Schweißdruck wird bis zum Abkühlen der Fügezone auf Umgebungstemperatur aufrecht erhalten.

Die Radialzahnung des plattenförmigen Heizelementes verläuft vom Umfang des Heizelementes konvergierend zum Mittelpunkt, wobei jede radiale Zahnrippe ein gleichseitiges Dreieck mit einem Flankenwinkel von 60° bildet.
Beim Anwärmvorgang müssen Mittelpunkt der Radialzahnung und die Rohrachsen in einer Achse liegen.

Die mit der Erfindung erzielten Vorteile bestehen insbesondere darin, daß mit dem dargestellten Stumpfschweißverfahren vernetzte Polyethylenrohre ( PE-X-Rohre ) direkt und ohne Schweißhilfsmittel oder einen Zusatzwerkstoff dauerhaft und haltbar miteinander verbunden werden können.

Durch die erfindungsgemäße Lösung wird der Einsatz vernetzter PE-Rohre größerer Durchmesser überhaupt erst kostengünstig möglich. Die Ergebnisse sind im gesamten industriellen und erdverlegten Rohrleitungsbau nutzbar.

Ein Ausführungsbeispiel der Erfindung ist in der Zeichnung dargestellt und wird im folgenden näher beschrieben.

Es wird eine Stumpfschweißverbindung zwischen zwei Rohren aus vernetztem Polyethylen der Dimension 110 x 10 mm hergestellt.
- **Fig. 1**: Stumpfschweißverbindung zwischen den Rohren **1** und **2** mit gekennzeichnetem Ausschnitt **3**
- **Fig. 2**: Vergrößerter Ausschnitt **3** nach Fig. 1 mit Einblick in die Schweißnaht
- **Fig. 3**: Geometrie der radialgezahnten Stinfläche des Heizelementes

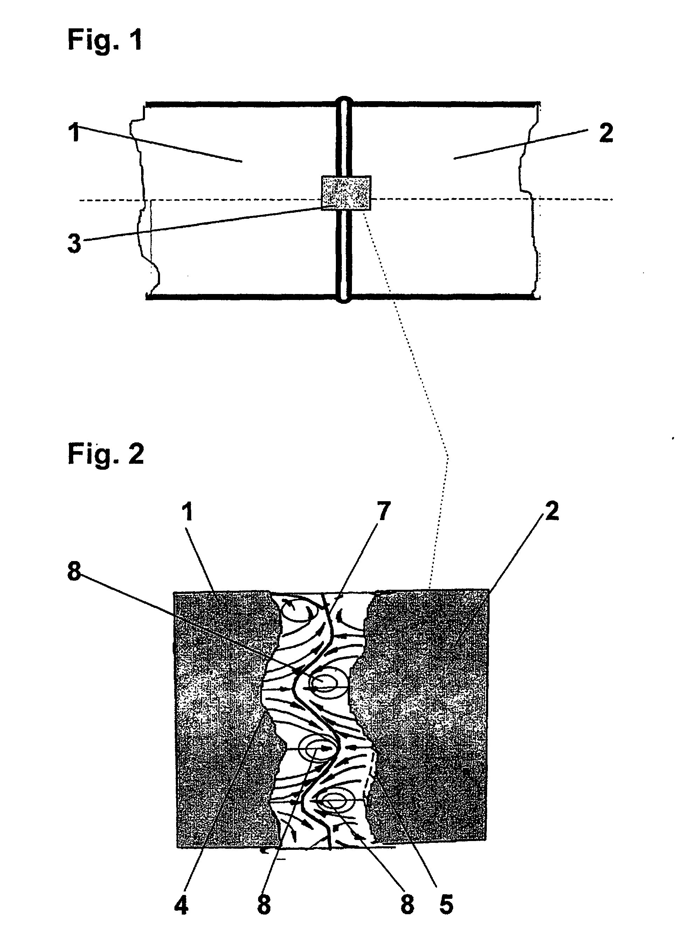

Nach **Fig.1** werden die PE-X-Rohre **1** und **2** durch Heizelementstumpfschweißen miteinander verbunden. Dazu werden die Rohrstirnflächen **4** und **5** der PE-X-Rohre **1** und **2** mit dem radialgezahnten Heizelement **6,** dessen Temperatur 435°C beträgt, mit einer Anwärmzeit von 180 s so aufgeschmolzen, daß an beiden Rohrstirnflächen **4** und **5** eine vergrößerte und gezahnte Oberfläche mit einer integralen Schmelzeschicht entsteht **Fig. 2**.

Bei dem sich nach dem Entfernen des Heizelementes **6** anschließendem sofortigen Fügevorgang mit einem Schweißdruck von 0,2 N/mm² erfolgt im Kontaktbereich der Bindefläche **7** ein gegenläufiges Fließen der Schmelze, welches zu turbulenten Vermischungen **8** sowie zu einem zusätzlichen mechanischen Mischeffekt und zu einer Bindeflächenvergrößerung führt.

Der Schweißdruck von 0,2 N/mm² wird bis zum Abkühlen der Fügezone auf Umgebungstemperatur aufrechterhalten. Nach der Abkühlung ist die Stumpfschweißung vollzogen und eine stoffschlüssige Verbindung zwischen den PE-X-Rohren hergestellt. Die erreichten Schweißfaktoren betragen 1, die Bedingungen des Zeitstand-lnnendruckversuches nach DIN 8075 werden erfüllt.

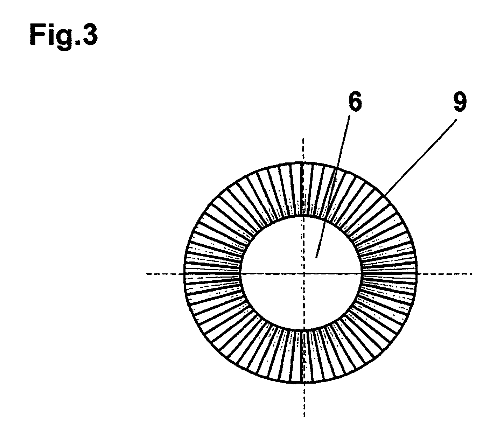

Nach **Fig. 3** besitzt das plattenförmige Heizelement **6** an seinen Stirnflächen eine radialgezahnte Profilierung **9 ,** wobei die Zähne im Querschnitt ein gleichseitiges Dreieck mit einem Flankenwinkel von 60° darstellen und die Zahnhöhe im Rohrdurchmesserbereich von
110 mm 4 mm beträgt.

### Bezugszeichenliste

- 1: PE-X-Rohr
- 2: PE-X-Rohr
- 3: Ausschnitt
- 4: Rohrstirnfläche
- 5: Rohrstirnfläche
- 6: Heizelement
- 7: Bindefläche
- 8: Werkstoffvermischungen
- 9: Profilrippe

## Patentansprüche

1. Verfahren zum Heizelementstumpfschweißen vernetzter Polyethylenrohre
wobei die Rohrstirnflächen (4; 5) durch die radial verzahnten Arbeitsflächen eines Heizelementes (6), dessen Temperatur >420°C aber <450°C beträgt, so räumlich aufgeschmolzen werden, daß vergrößerte und gezahnte Rohrstirnflächen (4; 5) entstehen, deren integrale Schmelzeschicht, die von der Dampf- oder Gasphase bis zur thermoelastischen Phase alle möglichen Schmelzezustandsphasen enthält, beim anschließenden Fügevorgang unter einem Schweißdruck von 0,10 bis 0,40 N/mm² so miteinander in Verbindung kommt, daß die Zahnspitzen der einen Rohrstirnfläche (4) auf die Zahngründe der anderen Rohrstirnfläche (5) treffen, daß eine verbindungsfähige Schmelzephase dieser Schicht durch turbulente Bewegungen ( 8 ) an den sich berührenden Zahnflanken einen Mischeffekt der Schmelze hervorruft und eine räumlich verteilte Schweißnaht mit vergrößerter Bindefläche (7) erzeugt, und wobei der Schweißdruck bis zum Abkühlen der Fügezone auf Umgebungstemperatur aufrecht erhalten wird.

2. Verfahren zum Heizelementstumpfschweißen vernetzter Polyethylenrohre nach Anspruch 1, **dadurch gekennzeichnet,**
**daß** die Zahnprofile (9) des Heizelementes (6) vom Umfang zum Mittelpunkt der je weiligen Heizelementstirnfläche konvergierend verlaufen und daß der Querschnitt der Zahnprofile einem gleichseitigem Dreieck mit einem Flankenwinkel von 60° entspricht.

## Claims

1. Method for the heating-element butt welding of crosslinked polyethylene pipes in which method, the pipe end faces (4; 5) are spatially melted by the radially serrated working faces of a heating element (6), the temperature of which is > 420°C but < 450°C, in such a way that enlarged and serrated pipe end faces (4; 5) are produced, the integral melt layers of which, which contain all possible phases of the melting state from the vapour or gas phase to the thermoelastic phase, come into connection with one another during the subsequent joining process under a welding pressure of 0.10 to 0.40 N/mm² in such a way that the tips of the teeth of the one pipe end face (4) meet the bases of the teeth of the other pipe end face (5), that a melt phase of these layers which is capable of entering into a connection evokes a mixing effect of the melt by means of turbulent movements (8) at the contacting tooth flanks and a spatially distributed weld seam is produced with an enlarged binding surface (7), and in which method the welding pressure is maintained until the joining zone has cooled to ambient temperature.

2. Method for the heating-element butt welding of crosslinked polyethylene pipes according to Claim 1, **characterized in that** the tooth profiles (9) of the heating element (6) proceed from the periphery to the centre point of the respective heating element end face in a converging manner and **in that** the cross section of the tooth profiles corresponds to an equilateral triangle with a flank angle of 60°.

## Revendications

1. Procédé de soudage bout à bout par élément de chauffage de tubes en polyéthylène réticulés, les surfaces frontales des tubes (4; 5) étant soumises à fusion dans l'espace par les surfaces de travail dentelées de manière radiale d'un élément de chauffage (6), dont la température est > 420°C mais < 450°C, de manière à faire apparaître des surfaces frontales de tube agrandies et dentelées (4; 5), dont la couche de fusion intégrale, qui contient tous les états de phase de masse en fusion possibles allant de la phase gaz ou vapeur jusqu'à la phase thermo-élastique, entre en contact l'une avec l'autre lors de la procédure de jointure subséquente sous une pression de soudage de 0,10 à 0,40 N/mm², de telle sorte que les pointes des dents d'une surface frontale de tube (4) touchent les fonds des dents de l'autre surface frontale de tube (5), de manière à ce qu'une phase de masse en fusion, capable de liaison de cette couche induise, par des mouvements turbulents (8), aux flancs de dents qui se touchent, un effet de mélange de la masse en fusion et produise un joint de soudure, distribué dans l'espace, ayant une surface de liaison agrandie (7), et la pression de soudage étant maintenue en force jusqu'au refroidissement, à la température ambiante, de la zone de jonction.

2. Procédé de soudage bout à bout par élément de chauffage de tubes en polyéthylène réticulés selon la revendication 1, **caractérisé en ce que** les profils de dents (9) de l'élément de chauffage (6) se prolongent, d'une manière convergente, de la périphérie jusqu'au point central de la surface frontale de l'élément de chauffage correspondant, et **en ce que** la section transversale des profils de dents correspond à un triangle équilatéral, ayant un angle de flanc de 60°.
